# EUROPEAN PATENT APPLICATION

(11) **EP 1 359 405 A1**
(43) Date of publication of application: **05.11.2003**
(21) Application number: 03008874.4
(22) Date of filing: 29.04.2003
(51) Int. Cl.: G01N 21/01, G01N 23/20, G01N 21/41, G02B 7/00

(54) **Measurement chamber with optical window**

(30) Priority: 30.04.2002 JP 2002127875
(71) Applicant: HORIBA, LTD., Kyoto (JP)
(72) Inventor: Hirakawa, Seiichi, Kisshoin, Minami-ku, Kyoto (JP); Kochi, Tetsu, Kisshoin, Minami-ku, Kyoto (JP)
(74) Representative: Müller - Hoffmann & Partner

(57) **Abstract**

The present invention relates to a measurement chamber with an optical window that enables more correct spectral measurements and angle variable measurements as well as to a corresponding method. In accordance with the invention, a measurement chamber comprises a sample chamber (1) configured and adapted for receiving a sample (3); and an optical window (6, 7) configured and adapted to permit light (8, 9) to pass therethrough from an exterior of said sample chamber to an interior of said sample chamber or vice-versa, wherein said optical window is movably mounted on said sample chamber.

## Description

### BACKGROUND OF THE INVENTION

### Field of the Invention

The present invention relates to a measurement chamber with optical window used for spectroscopic measurement and in particular to, a measurement chamber with optical window that the position of the optical window can be adjusted as well as to a corresponding method.

### Description of the Prior Art

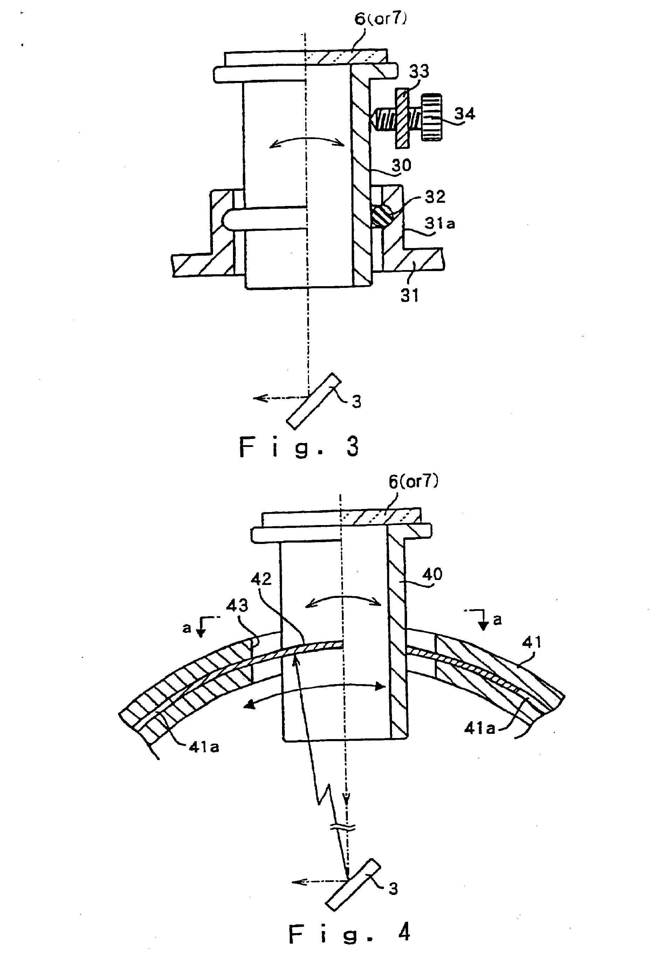

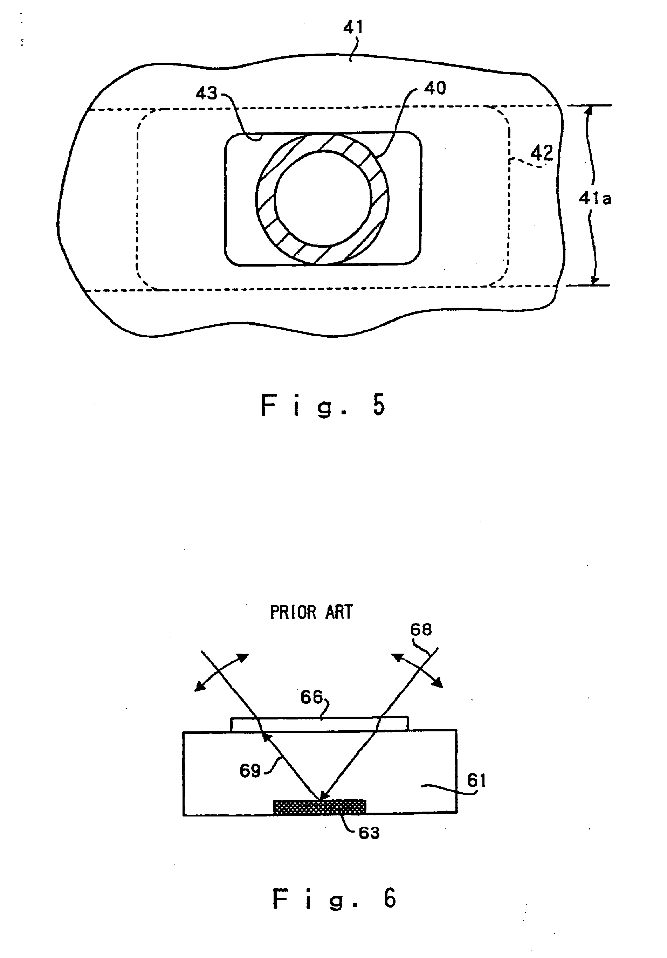

For measurements using optical interferometers or ellipsometers, there may be cases that a sample must be placed within a sample chamber with optical window in order to isolate the sample from exterior atmospheres. Fig. 6 shows a principle view for explaining problems about a conventional device with optical window. A sample chamber 61 is usually maintained at vacuum or low temperature and provided with an optical window 66 for isolating its interior from exterior atmospheres. Light 68 to be radiated onto a sample 63 is projected via the optical window 66 onto the sample. Light 69 influenced by the sample exits the sample chamber 61 via the optical window 66.

Because the optical window 66 is inclined with respect to the path of the light 68, it is difficult to carry out *e.g*. various spectral and angular measurements for the same point on the sample 63 due to influences of chromatic aberration. In the case of performing a spectroscopic ellipsometric measurement by using a low temperature cryostat, there is a need for varying the incident angle of the light radiated onto a measurement point on the surface of a sample. If angle variable measurement is performed in such case, the optical path of the light 68, 69 may vary depending on its wavelength since the optical window 66 is fixed. As a result, correct measurements cannot be performed in conventional measurement chambers.

In view of the above, it is an object of the present invention to provide a measurement chamber with an optical window that enables more correct spectral measurements and angle variable measurements. It is likewise an object of the invention to provide a method for more correct spectral measurements and angle variable measurements.

### SUMMARY OF THE INVENTION

In its broadest aspect, the invention can be seen in a measurement chamber wherein a optical window is movably mounted on a sample chamber. The invention can be likewise seen in adjusting a position of an optical window relative to a sample chamber.

By providing for adjustment of the relative angle of the optical window vis-à-vis the sample chamber, the angle at which a light beam employed for optical measurement intersects the optical window as it passes from an exterior of the sample chamber to an interior of the sample chamber, or vice-versa, can be controlled, i.e. can be tailored to minimize chromatic aberrations or can be altered so as to remain the same between measurements of the sample at various incident angles.

Preferably, the light beam passes orthogonally through the optical window, which is advantageous for reducing optical aberrations.

It is likewise advantageous if adjustment of the optical window relative to the sample chamber can be carried out without breaking a hermetic seal between the optical window and the sample chamber. This allows several measurements to be carried in swift sequence and without the danger of contaminating the sample.

In accordance with a preferred embodiment of the invention, a measurement chamber comprises a sample chamber in which a sample is placed, an optical window and an optical window supporting member which supports the optical window at its one end, is connected to the sample chamber and is adjustable so that light connecting the optical window to a measurement point on the sample is orthogonal to the optical window.

In accordance with a further preferred embodiment of the invention, the optical window supporting member is a metallic flexible tube.

In accordance with a further preferred embodiment of the invention, the optical window supporting member is formed of an optical window cylinder for supporting the optical window, a receiving cylinder formed at the side of the sample chamber for receiving the optical window cylinder and a seal portion provided between the optical window cylinder and the receiving cylinder.

In accordance with a further preferred embodiment of the invention, the optical window supporting member is formed of an optical window cylinder for supporting the optical window, a circular arc-shaped slide plate provided at the optical window cylinder and a guide portion for receiving the cylinder and hermetically guiding the slide plate.

### BRIEF DESCRIPTION OF THE DRAWINGS

Fig. 1 is a schematic view illustrating an example of a measurement chamber with optical window relating to the present invention.
Fig. 2 is a view illustrating a detailed example used in combination with the example and a goniometer.
Fig. 3 is a schematic view illustrating another example of an optical window supporting member used in the device of the present invention.
Fig. 4 is a schematic view illustrating yet another example of the optical window supporting member used in the device of the present invention, seen from a direction orthogonal to an optical axis of the supporting member.
Fig. 5 is an a-a cross sectional view of the example shown in Fig. 4, seen from a direction parallel to the optical axis.
Fig. 6 is a principal view for explaining problems of a conventional device with optical window.

### DETAILED DESCRIPTION OF THE PREFERRED EMBODIMENTS

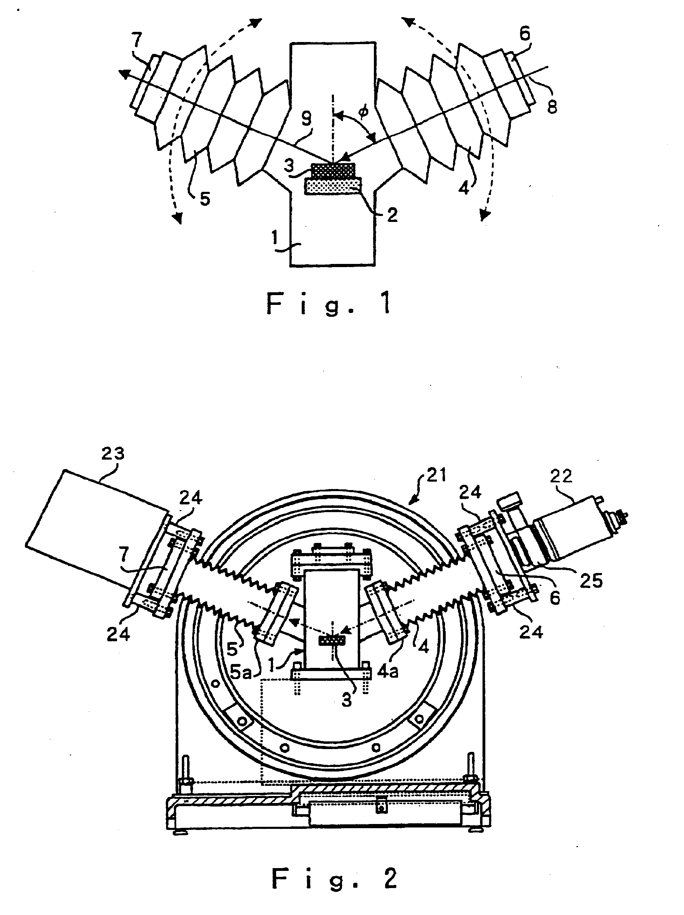

Embodiments of a present device will be described with reference to the drawings. Fig. 1 shows a schematic view illustrating an example of a measurement chamber with an optical window in accordance the present invention. A sample 3 to be measured is placed on a sample stand 2 in a sample chamber 1. The sample chamber 1 is provided with a support member 4 for supporting an optical window 6 for incident light and a support member 5 for supporting an optical window 7 for emergent light. Each of the support members 4 and 5 is formed of a metallic bellow hermetically fixed to the sample chamber 1 and thus has flexibility. The support members 4 and 5 can preferably maintain their deformed states.

Optical windows 6 and 7 are hermetically fixed to one end of the flexible support members 4 and 5, respectively. The flexible support members 4 and 5 can move *e.g*. in directions shown by the arrows in the figure. The position of flexible support members 4 and 5 is adjusted so that the surface of the optical window 6 is preferably orthogonal to the beam path of incident light 8 whereas the incident light 8 impinges the center or a central area of the sample 3 along a beam path of incident light 8 having an incident angle φ relative to the sample 3.

Similarly, a emergent light 9 that has been subjected to the influence of the sample 3, interference and polarization enters an detection head (not shown). In this case also, the metallic bellow constituting the support member 5 is adjusted so that the beam path of the emergent light 9 is preferably orthogonal to the surface of the optical window 7 in the same manner as the described above.

Fig. 2 is a view illustrating a detailed example employing a combination of the aforementioned example and a goniometer. The sample chamber 1 is used with a goniometer 21. A measurement point on the sample 3 placed within the sample chamber 1 serves as the center of angle. The above-described support member 4 formed of as a metallic bellow is hermetically fixed via a flange 4a to the sample chamber 1.

Similarly, the support member 5 is also hermetically fixed via a flange 5a to the sample chamber 1. The optical window 6 is fixed to the support member 4, and the optical window 7 is fixed to the support member 5, respectively. Fixed to a frame for supporting the optical window 6 is an optical head (optical source) 22 via a plurality of posts 24 (four posts in this example) and an optical head fixing member 25. An optical head (light receiving) mounting plate 23 is fixed via posts 24 to a frame for supporting the optical window 7. For measurement, an incident angle may be varied within a certain range, for example, "65° ± 10°". The incident angle is varied by goniometer 21 which is known as an apparatus for varying the angle.

Fig. 3 is a schematic view illustrating another example of a optical window supporting member employable in the apparatus of the present invention. An sample (not shown) is placed inside a sample chamber 31. The sample chamber 31 is provided with support members for supporting an optical window 6 for incident light and an optical window 7 for emitting light. Because the support members may have substantially the same structure, only one support member will be described.

The sample chamber 31 is provided with a cylinder or cylindrical flange 31a for optical input into the sample chamber. An optical window supporting cylinder 30 is inserted into the cylinder or cylindrical flange 31a where it is held by a seal member (*e.g*. an O-ring) 32 constituting a seal portion. The optical window 6 or 7 is hermetically fixed to the optical window supporting member 30. Preferably, an adjustment screw 34 is provided in an arm 33, and the angle of the optical window supporting cylinder 30 can be adjusted within a range of deformation that the seal member (O-ring) 32 can maintain hermetic sealing.

Fig. 4 is a schematic view illustrating yet another example of the optical window supporting member employable in the apparatus of the present invention, seen from a direction orthogonal to the optical axis of the supporting member. Fig. 5 is a cross-sectional view (a-a) of the example seen from a direction parallel to the optical axis. A sample chamber opening 43 is provided in a sample chamber 41. The optical window supporting member has an optical window supporting cylinder 40 for supporting the optical window 6 or 7. The optical window supporting cylinder 40 is provided with a slide plate 42 that hermetically slides in a guide member 41a of the sample chamber 41. Thus, the optical window supporting cylinder 40 and the slide plate 42 are hermetically movable with respect to the sample chamber opening 43, *i.e*. to the sampling chamber 41. The slide plate 42 as well as the corresponding receptacle of the guide member 41a preferably have the shape of a circular arc in the sliding direction so that the slide plate 42 is guided in a circular arc manner. The optical window supporting cylinder 40 is thus slid in a circular arc manner and is able to maintain, if desired, an orthogonal relationship between the surface of the optical window 6 or 7 and an optical path of an incident 8 or emergent 9 beam of light. Preferably, the guide member 41a is a space which is provided within walls of the sample chamber 41. In order to further ensure a hermetic seal, viscous seal material such as grease may employed *e.g*. at the interface of the slide plate 42 and the guide member 41a.

As already described in detail, a measurement chamber in accordance with the present invention allows adjustment of the optical window so that an optical path is preferably orthogonal to the optical window. Accordingly, the beam position on a sample can be maintained at the same point even if the angle of incidence of the beam onto the sample is varied. Even if spectral measurement is performed while varying the incident angle, influences of chromatic aberration are not exerted and the beam position on a sample can be maintained at the same point.

The sample chamber of the present invention is especially effective in spectroscopic ellipsometric measurement and spectral reflection measurement of a sample under low temperature conditions or a vacuum condition. Namely, angle variable measurement of a sample at low temperatures becomes possible. Because a window of a low temperature cryostat (vacuum chamber) is adjusted so as to be orthogonal to an optical path of the light beam used for optical measurement, influences of chromatic aberration cannot be exerted during spectral measurement and thus the beam position on a sample is maintained at the same point.

### (Modified Examples)

Various types of modifications may be performed upon the embodiments described in detail within the scope of the present invention. The present invention may be widely utilized for other measurements including reflectance measurement as well as spectroscopic ellipsometric measurement. Further, the present invention may be utilized in the case where a beam is converged and the case where an optical window is formed as a lens configuration so as to maintain a wavefront. In this case, adjustment is performed accordingly relative to the optical axis of the lens system, preferably so that a plane parallel to an optical axis is orthogonal to an optical path. It is likewise preferable that the optical axis of the lens system and the optical path of the light beam used for measurement are parallel.

## Claims

1. A measurement chamber comprising:
a sample chamber (1) configured and adapted for receiving a sample (3); and
an optical window (6, 7) configured and adapted to permit light (8, 9) to pass therethrough from an exterior of said sample chamber to an interior of said sample chamber or vice-versa, wherein
said optical window is movably mounted on said sample chamber.

2. The measurement chamber of claim 1, wherein
said sample chamber is configured and adapted for receiving said sample at a sample location in said sample chamber, and
said optical window is configured and adapted to be movable such that a beam path between said optical window and said sample location is orthogonal to said optical window.

3. The measurement chamber of any of the preceding claims, comprising an optical window support member (4, 5) via which said optical window is movably mounted on said sample chamber.

4. The measurement chamber of claim 3, wherein said optical window support member supports said optical window at a first end of said optical window support member, is connected to said sample chamber and is adjustable so that light connecting said optical window to a measurement point on said sample is orthogonal to said optical window.

5. The measurement chamber of claim 3 or 4, wherein said optical window support member is a metallic flexible tube (4, 5).

6. The measurement chamber of claim 3 or 4, wherein said optical window support member is formed of an optical window cylinder (30) for supporting the optical window, a receiving cylinder (31a) formed at the side of the sample chamber (31) for receiving the optical window cylinder and a seal portion (32) provided between the optical window cylinder and the receiving cylinder.

7. The measurement chamber of claim 3 or 4, wherein said optical window support member is formed of an optical window cylinder (40) for supporting the optical window, a circular arc-shaped slide plate (42) provided at the optical window cylinder and a guide portion (41a) for receiving the cylinder and hermetically guiding the slide plate.

8. The measurement chamber of any of claims 1 to 4, comprising:
an optical window support cylinder (30) that supports said optical window, wherein
said sample chamber comprises a cylindrical flange (31a) having a deformable seal member,
said cylindrical flange and said seal member are configured and adapted to moveably, yet hermetically receive said optical window support cylinder.

9. The measurement chamber of claim 8, comprising adjustment means (33, 34) for adjusting a position of said optical window support cylinder relative to said cylindrical flange by exerting a force on said optical window support cylinder so as to effect a deformation of said deformable seal member.

10. The measurement chamber of any of claim 1 to 4, comprising:
an optical window support cylinder (40) that supports said optical window and
comprises a slide plate (42), wherein
said sample chamber (41) comprises a sample chamber opening (43) for movably receiving said an optical window support cylinder and a guide member (41a) for movably receiving said slide plate (42),
said guide member, said slide plate and said optical window support cylinder configured and adapted to provide a movable, hermetic interface between said sample chamber and said optical window.

11. The measurement chamber of claim 10, wherein said guide member and said slide plate have a circular arc shape.

12. The measurement chamber of any of the preceding claims, wherein said optical window is hermetically mounted on said sample chamber.

13. A method of carrying out optical measurements on a sample (3), comprising the sequential steps of:
placing said sample in a sample chamber (1) having an optical window (6, 7) interfaced therewith so as to permit a light beam (8, 9) employed for optical measurement of said sample to pass from an exterior of said sample chamber to an interior of said sample chamber or vice-versa;
adjusting a position of said optical window relative to said sample chamber such that said optical window adopts a predetermined angle to said light beam at their intersection;
carrying out a first optical measurement on said sample via said optical window.

14. The method of claim 13, comprising the sequential steps of :
altering an angle at which said light beam intersects said optical window;
adjusting a position of said optical window relative to said sample chamber such that said optical window adopts a predetermined angle to said light beam at their intersection;
carrying out a second optical measurement on said sample via said optical window.

15. The method of claim 13 or 14, wherein any of said adjustments of said position of said optical window relative to said sample chamber is effected without breaking a hermetic seal therebetween.

16. The method of any of claim 13 to 15, wherein any of said adjustments of said position of said optical window relative to said sample chamber comprises adjusting a position of said optical window relative to said sample chamber such that said optical window is perpendicular to said light beam at their intersection.
